# FASCICULE DE BREVET EUROPEEN

(11) **EP 3 856 570 B1**
(45) Date de publication et mention de la délivrance du brevet: **14.02.2024**
(21) Numéro de dépôt: 19779406.8
(22) Date de dépôt: 23.09.2019
(51) Int. Cl.: B60Q 3/78, B60Q 3/60, B60Q 3/217, B60Q 3/14

(54) **SYSTÈME OPTIQUE POUR ÉCLAIRAGE INTÉRIEUR D'UN VÉHICULE**
OPTISCHES SYSTEM ZUR INNENRAUMBELEUCHTUNG EINES FAHRZEUGS
OPTICAL SYSTEM FOR INTERIOR LIGHTING OF A VEHICLE

(30) Priorité: 27.09.2018 FR 1858875
(43) Date de publication de la demande: 04.08.2021
(73) Titulaire: Valeo Vision, 93012 Bobigny (FR)
(72) Inventeur: LE CORRE, Jerome, 93012 BOBIGNY Cedex (FR); COLLOT, Patrice, 93012 BOBIGNY Cedex (FR); PETIT, Julia, 93012 BOBIGNY Cedex (FR)
(74) Mandataire: Valeo Visibility
(86) Numéro de dépôt international: PCT/EP2019/075457
(87) Numéro de publication internationale: WO 2020/064590

(56) Documents cités:
- EP-A1- 2 924 486
- WO-A1-2016/079459
- DE-A1-102016 200 579
- FR-A1- 3 005 717
- JP-A- H10 142 010
- JP-A- 2007 131 126
- US-A1- 2002 041 498
- US-B2- 8 162 519

## Description

Le domaine de la présente invention est celui des systèmes optiques, notamment destinés à éclairer l'intérieur d'un habitacle d'un véhicule, notamment d'un véhicule automobile.

Dans l'état de la technique, il est connu de tels systèmes optiques comprenant une source lumineuse, un écran et un guide lumineux situé entre l'écran et la source lumineuse. La source lumineuse permet l'émission d'un faisceau lumineux, le guide lumineux permettant l'homogénéisation du faisceau lumineux tout en permettant d'acheminer le faisceau lumineux jusqu'à l'écran, ce dernier permettant enfin la diffusion du faisceau lumineux.

Ces systèmes optiques connus ne donnent pas entière satisfaction et présentent des inconvénients. En effet, l'utilisation d'un guide lumineux connu nécessite un encombrement minimal afin de permettre une bonne homogénéisation du faisceau lumineux avant que celui-ci ne soit transmis à l'écran, cet encombrement n'étant pas toujours compatible avec des contraintes liées à l'espace disponible ou encore à une forme géométrique à l'emplacement où doit être installé le système optique dans l'habitacle du véhicule automobile. D'autre part, le volume interne du guide lumineux dans lequel se déplace le faisceau lumineux émis par la source lumineuse est rempli par la matière constitutive du guide lumineux, classiquement du poly méthacrylate de méthyle, connu sous l'acronyme PMMA, et cela impose une réfraction du faisceau lumineux à l'intérieur du guide lumineux, ladite réfraction pouvant perturber l'homogénéisation du faisceau lumineux dans le guide lumineux. Le document EP2924486A1 montre un système optique pour éclairage intérieur d'un véhicule automobile utilisant un concept de boite à lumière.

La présente invention a pour but de proposer un système optique permettant de répondre au moins en partie aux inconvénients énoncés précédemment et de conduire en outre à d'autres avantages. Ainsi, la présente invention a pour but de permettre l'utilisation d'un système optique dans un emplacement étroit ne permettant pas l'utilisation d'un guide lumineux connu, et notamment l'utilisation d'un système optique sous forme de bandeau, présentant alors une dimension principale dans un axe longitudinal du système optique et une dimension secondaire dans un axe perpendiculaire à l'axe longitudinal, la dimension principale étant sensiblement plus importante que la dimension secondaire, tout en assurant une homogénéisation satisfaisante du faisceau lumineux par le système optique. D'autre part, l'invention a pour but de permettre l'obtention d'un éclairage dynamique, dans lequel plusieurs sources lumineuses du système optique peuvent être allumées et/ou éteintes successivement afin d'afficher des informations et/ou de créer une ambiance lumineuse à l'intérieur de l'habitacle du véhicule automobile.

L'invention y parvient, par la mise en oeuvre des caractéristiques de la revendication 1.

L'éclairage intérieur du véhicule automobile est destiné à éclairer l'intérieur d'un habitacle du véhicule automobile.

L'agencement en série de la pluralité de sources lumineuses forme un axe longitudinal du système optique. Il est entendu que l'agencement en série des sources lumineuses désigne le positionnement des sources lumineuses de la pluralité de sources lumineuses les unes à la suite des autres, en formant une courbe ou ligne, et non le type de montage électrique assurant l'alimentation électrique des sources lumineuses.

La pluralité de sources lumineuses, la boite à lumière et l'écran sont empilés les uns en série des autres selon un axe d'empilement perpendiculaire à l'axe longitudinal.

Le système optique forme un bandeau lumineux. En effet, le système optique s'étend le long d'un axe vertical perpendiculaire à un plan formé par l'axe longitudinal et l'axe d'empilement selon une distance comprise de préférence entre 6 millimètres et 25 millimètres, tandis qu'il s'étend le long de l'axe longitudinal selon une distance de préférence supérieure à 20 centimètres. De préférence, le système optique s'étend dans l'axe d'empilement selon une distance comprise entre 5 et 40 millimètres.

La boite à lumière définit un volume interne rempli d'air délimité par des parois aux propriétés réfléchissantes. Ainsi, le faisceau lumineux est émis depuis la source lumineuse avant d'être projeté sur l'écran, en étant seulement dévié par des réflexions, à une unique ou à de multiples reprises, contre les parois de la boîte à lumière avant d'être projeté sur l'écran.

Ainsi, la boite à lumière selon l'invention se distingue d'un guide lumineux définissant également un volume interne délimité par des parois mais rempli par la matière constitutive des parois du guide lumineux, la matière constitutive du guide lumineux étant par exemple du poly méthacrylate de méthyle, connu sous l'acronyme PMMA. Selon l'invention, le faisceau lumineux n'est pas réfracté au sein de la boite à lumière, celle-ci étant remplie d'air, contrairement à un faisceau lumineux se déplaçant dans un guide lumineux connu.

La boite à lumière comprend une pluralité de cavités disposées en série les unes par rapport aux autres selon l'axe longitudinal, chaque cavité étant délimitée par une paroi réfléchissante formée par la matière constitutive de la boite à lumière. Ainsi, la paroi réfléchissante délimitant chacune des cavités permet de guider le faisceau lumineux émis par la source lumineuse, notamment vers une zone de l'écran située en regard de ladite cavité, la source lumineuse étant située à l'intérieur de la cavité ou en bordure de celle-ci de manière à émettre un faisceau à l'intérieur de la cavité. Ainsi, la paroi d'une première cavité est configurée de sorte que le faisceau lumineux émis par une première source lumineuse présente dans ladite première cavité soit projeté au niveau d'une zone d'écran située en regard de la première cavité. Ainsi la paroi de la première cavité évite que le faisceau lumineux émis par la première source lumineuse ne soit projeté au niveau d'une zone d'écran en regard d'une deuxième cavité, ladite deuxième cavité étant notamment adjacente à la première cavité. Ainsi, la paroi de la cavité permet d'éviter au faisceau lumineux émis par la source lumineuse située dans ladite cavité d'être, au moins partiellement, projeté dans une autre cavité.

Chaque source lumineuse peut être activée et/ou désactivée de manière indépendante des autres sources lumineuses, formant ainsi un faisceau matriciel activable sélectivement. Par exemple, une première source lumineuse peut être activée, émettant alors un faisceau lumineux, tandis qu'une source lumineuse voisine est désactivée, n'émettant pas de faisceau lumineux. On permet ainsi l'allumage ou l'extinction de différentes zones de l'écran et l'obtention d'une matrice de lumière dont on peut modifier la forme à la demande.

Enfin, dans cette configuration selon l'invention, le système optique ne comprend pas de pièce optique supplémentaire intercalée entre la source lumineuse et l'écran pour l'homogénéisation du faisceau lumineux.

Selon l'invention, la cavité comprend un profil elliptique dans un premier plan perpendiculaire à l'écran et passant par la source lumineuse associée à ladite cavité. On définit la zone d'écran associée à une cavité comme une zone qui s'étend selon un premier axe et un deuxième axe perpendiculaires entre eux, la zone d'écran comprenant un petit côté dans le premier axe et un grand côté dans le deuxième axe, le petit côté étant défini par une dimension plus petite que le grand côté. Notamment, le premier axe correspond à l'axe vertical, le deuxième axe correspondant quant à lui à l'axe longitudinal. La cavité présente un profil elliptique selon un premier plan, perpendiculaire à l'écran et passant par la source lumineuse associée à ladite cavité, et comprenant le premier axe. Ainsi, le profil elliptique de la cavité permet de favoriser la réflexion des rayons lumineux du faisceau lumineux de sorte que les rayons lumineux soient concentrés au niveau de l'écran, la concentration des rayons lumineux étant réalisée suivant une composante verticale, c'est-à-dire selon le premier axe. Ainsi, selon cette configuration, le profil elliptique de la cavité permet la concentration des rayons réfléchis au centre de l'écran selon la direction verticale, c'est-à-dire la direction perpendiculaire à l'axe d'empilement et l'axe longitudinal ;

Selon l'invention, la cavité comprend un profil parabolique dans un deuxième plan perpendiculaire à l'écran et qui passe par la source lumineuse associée à ladite cavité. Conformément à ce qui a été décrit précédemment, on définit la zone d'écran associée à une cavité comme une zone qui s'étend selon un premier axe et un deuxième axe perpendiculaires entre eux, la zone d'écran comprenant un petit côté dans le premier axe et un grand côté dans le deuxième axe, le petit côté étant défini par une dimension plus petite que le grand côté. Notamment, le premier axe correspond à l'axe vertical, le deuxième axe correspondant quant à lui à l'axe longitudinal. La cavité présente un profil parabolique selon un deuxième plan, perpendiculaire à l'écran et passant par la source lumineuse associée à ladite cavité, et comprenant le deuxième axe longitudinal. Le profil parabolique de la cavité permet de collimater les rayons lumineux du faisceau lumineux et sa disposition dans un plan comprenant le deuxième axe longitudinal permet une répartition homogène selon l'axe longitudinal du faisceau lumineux au niveau de la zone d'écran en regard de la source lumineuse générant ledit faisceau lumineux dans la cavité. De proche en proche avec chacune des cavités présentant un tel profil parabolique, on s'assure d'une répartition homogène du faisceau sur toute la longueur du bandeau formant la surface d'écran ;

Le système optique selon l'invention comprend à la fois un profil elliptique selon le premier plan et un profil parabolique selon le deuxième plan. Ainsi, cette configuration permet à la fois la concentration des rayons lumineux au niveau de l'écran du fait du profil elliptique ainsi que la collimation du faisceau lumineux émis par la source lumineuse du fait du profil parabolique ;

Selon l'invention, le premier plan et le deuxième plan sont perpendiculaires entre eux.

Le premier plan s'étend selon l'axe d'empilement et l'axe vertical, le deuxième plan s'étendant selon l'axe d'empilement et l'axe longitudinal, l'axe vertical étant parallèle au petit côté de la zone d'écran, l'axe longitudinal étant parallèle au grand côté de la zone d'écran ;

De manière avantageuse, la source lumineuse est une source lumineuse RGB et/ou une source lumineuse RGBW. Chaque source lumineuse RGB peut émettre un faisceau rouge, vert ou bleu, ou une combinaison de faisceaux rouge, vert et/ou bleu. Une source lumineuse RGBW peut en outre émettre de manière alternative ou cumulative un faisceau blanc obtenu par des moyens de conversion de longueur d'ondes appropriés. Selon cette configuration, la pluralité de sources lumineuses peut comprendre uniquement des sources lumineuses RGB, ou bien uniquement des sources lumineuses RGBW, ou encore une combinaison de sources lumineuses RGB et de sources lumineuses RGBW. Chaque source lumineuse peut notamment être une diode électroluminescente, connue sous l'acronyme DEL, ou LED selon l'acronyme anglais pour « Light-Emitting Diode » ;

De manière avantageuse, la boite à lumière comprend une dimension selon l'axe d'empilement qui est variable entre une première extrémité longitudinale et une deuxième extrémité longitudinale. Cette configuration permet de faciliter le procédé de fabrication du système optique. En effet, les sources lumineuses sont montées sur un circuit imprimé. L'utilisation d'un circuit imprimé situé dans un plan unique permet de faciliter le procédé de fabrication du système optique et donc de diminuer son coût de fabrication. Selon cette configuration, la boite à lumière permet de compenser la différence de plan entre une première zone de l'écran et une deuxième zone de l'écran, par exemple dans le cas où l'écran présente une courbure le long de l'axe longitudinal, tandis que le circuit imprimé sur lequel sont montées les sources lumineuses s'étend parallèlement à l'axe longitudinal. Plus particulièrement, la compensation de la différence de plan est obtenue par la modification d'un profil d'une cavité, notamment du profil elliptique et/ou du profil parabolique de la cavité, ou encore en modifiant la dimension de la boite à lumière selon l'axe d'empilement ;

selon l'invention, un rapport entre une première dimension propre à une paroi d'une cavité et une deuxième dimension propre à la boite à lumière, la première dimension et la deuxième dimension étant mesurées parallèlement à l'axe d'empilement, est compris entre 40% et 85%. Plus particulièrement, la première dimension est mesurée entre un fond de la cavité, c'est-à-dire à proximité de la source lumineuse, et une extrémité libre de la paroi située à l'opposé de la cavité par rapport au fond. La deuxième dimension est quant à elle mesurée entre le fond de la cavité et la partie de la boite à lumière qui reçoit l'écran ;

De manière avantageuse, une face interne de la paroi est recouverte d'un matériau permettant simultanément une réflexion spéculaire et une réflexion diffuse du faisceau lumineux. La face interne de la paroi est la face de la paroi qui est située vers l'intérieur de la cavité. Autrement dit, la face interne de la paroi est exposée aux rayons lumineux du faisceau lumineux émis par la source lumineuse présente dans ladite cavité. De manière avantageuse, le matériau est de couleur blanche, permettant ainsi la réflexion de l'ensemble des longueurs d'ondes du faisceau lumineux. Par exemple, ledit matériau peut être le matériau portant la dénomination suivante : ALBIS ALCOM PWL 10/1.1 WT1302-05LB. Ce matériau est avantageux car il offre un bon compromis entre la réflexion spéculaire et diffuse. Ainsi le ratio entre la réflexion spéculaire et la réflexion diffuse induite lors de la projection d'un faisceau lumineux à ce matériau est compris entre 5% de réflexion spéculaire pour 95% de réflexion diffuse et 40% de réflexion spéculaire pour 60% de réflexion diffuse. Ainsi, un matériau présentant des caractéristiques similaires ou proches permet une meilleure homogénéisation des rayons lumineux du faisceau lumineux. D'autre part, il est notable selon l'invention que dans une configuration comprenant un profil elliptique et/ou parabolique, la source lumineuse doit être positionnée théoriquement au niveau d'un foyer objet du profil. Cependant, l'utilisation d'une boite à lumière dont la face interne de la paroi est recouverte par un tel matériau permet une souplesse sur la disposition théorique de la source lumineuse au niveau du foyer objet ;

De manière avantageuse, la face interne de la paroi comprend une pluralité de microstructures diffusantes. Les microstructures diffusantes permettent de favoriser la réflexion diffuse, notamment par rapport à une configuration dans laquelle la face interne de la paroi est dépourvue de microstructures diffusantes, de telles microstructures diffusantes pouvant aller jusqu'à doubler le taux de réflexion diffuse. Ainsi, les microstructures diffusantes permettent une meilleure homogénéisation des rayons lumineux du faisceau lumineux au niveau de la boite à lumière. Par exemple, les microstructures diffusantes peuvent prendre la forme de coussinets s'étendant depuis la face interne de la paroi vers l'intérieur de la cavité ;
les microstructures diffusantes peuvent être situées sur le profil elliptique et/ou sur le profil parabolique de la face interne de la paroi ;
de préférence, les microstructures diffusantes sont situées dans une partie proximale de la cavité, c'est-à-dire à proximité de la source lumineuse selon l'axe d'empilement ;

De manière avantageuse, l'écran est un écran diffusant. Cette configuration permet d'homogénéiser la colorimétrie et/ou la luminance du faisceau lumineux au niveau de chaque zone de l'écran ;

De manière avantageuse, le système optique comporte un module de commande configuré pour donner des instructions sélectives d'activation des sources lumineuses pour permettre l'affichage d'un signal lumineux dynamique et/ou multicolore. Le signal lumineux correspond à la projection, sur l'écran, d'un faisceau lumineux global formé par l'ensemble de faisceaux lumineux individuels émis par chaque source lumineuse. Ainsi, le signal lumineux est dynamique lorsque le faisceau lumineux global est modifié dans le temps par l'allumage et l'extinction de différentes zones d'écran. De préférence, le bandeau formé par le système optique s'étend dans l'axe longitudinal selon une distance de préférence supérieure à 20 centimètres, permettant ainsi de donner au signal lumineux un effet dynamique perceptible par un occupant se trouvant à l'intérieur du véhicule automobile. Le signal lumineux est multicolore lorsqu'il présente deux couleurs différentes au niveau de deux zones d'écran différentes. Le système optique peut ainsi être utilisé, par exemple, comme un répétiteur de clignotant, ou comme un indicateur de présence dans un angle mort du véhicule. Dans ce dernier exemple, l'objet, tel qu'un autre véhicule automobile, présent dans l'angle mort peut ainsi être symbolisé par un signal lumineux se déplaçant sur l'écran.

Selon un deuxième aspect, l'invention a également pour objet un véhicule automobile comprenant un dispositif d'éclairage intérieur, le dispositif d'éclairage intérieur comprenant un système optique conforme au premier aspect de l'invention.

Cette configuration selon le deuxième aspect permet ainsi à un véhicule automobile de disposer d'un système optique conforme au premier aspect, permettant ainsi l'installation d'un système optique conforme à l'invention à un endroit de l'habitacle dans lequel l'installation d'un système optique connu est impossible, notamment du fait de contraintes d'encombrement spatial du système optique connu.

De manière avantageuse, dans un véhicule automobile conforme au deuxième aspect de l'invention, le système optique est situé au niveau d'un bandeau d'une porte et/ou d'une planche de bord du véhicule automobile. Cette configuration permet au système optique d'être visible par le conducteur et/ou un passager du véhicule automobile. Ainsi, le conducteur et/ou le passager peut recevoir une information par l'intermédiaire du signal lumineux, l'information concernant par exemple une situation de la scène de la route. De manière alternative ou cumulative, le système optique peut être situé à tout autre endroit d'un habitacle du véhicule automobile.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
- Les figures 1 et 2 illustrent une vue en perspective d'un habitacle d'un véhicule automobile conforme au deuxième aspect de l'invention, les figures 1 et 2 illustrant deux modes de fonctionnement d'un système optique du véhicule automobile ;
- la figure 3 est une vue partielle en perspective d'un exemple de réalisation d'un système optique conforme au premier aspect de l'invention ;
- la figure 4 illustre un détail du système optique illustré à la figure 3 ;
- la figure 5 est une vue en coupe d'un exemple de réalisation d'un système optique conforme au premier aspect de l'invention, la coupe étant réalisée dans un plan comprenant l'axe longitudinal et l'axe d'empilement ;
- la figure 6 est une représentation schématique d'une cavité d'un exemple de réalisation d'un système optique conforme au premier aspect de l'invention dans un plan comprenant l'axe vertical et l'axe d'empilement ;
- la figure 7 est une représentation schématique d'une cavité d'un exemple de réalisation d'un système optique conforme au premier aspect de l'invention dans un plan comprenant l'axe longitudinal et l'axe d'empilement ;
- la figure 8 est une vue en perspective d'un autre exemple de réalisation d'un système optique conforme au premier aspect de l'invention.

Les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

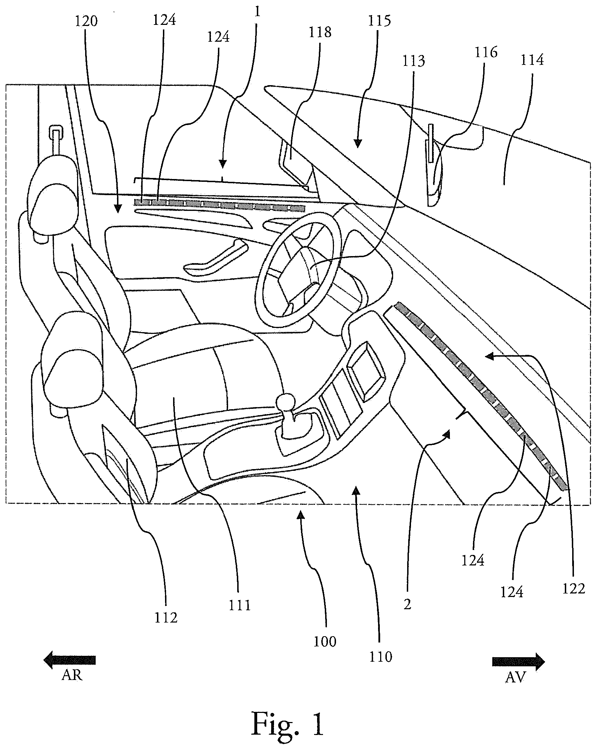

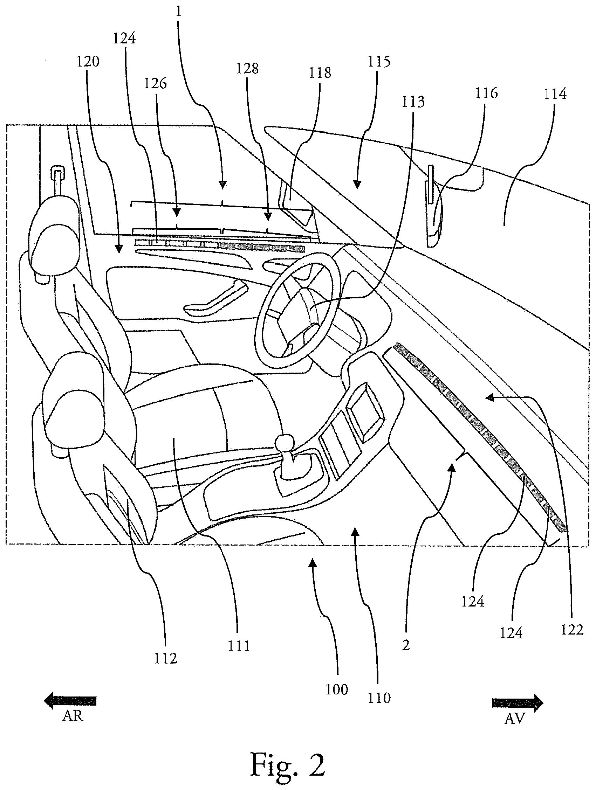

Les figures 1 et 2 illustrent une vue en perspective d'un habitacle 110 d'un véhicule automobile 100 conforme au deuxième aspect de l'invention, les figures 1 et 2 illustrant deux modes de fonctionnement d'un système optique du véhicule automobile 100.

L'habitacle 110 du véhicule automobile 100 comprend un premier siège 111 et un deuxième siège 112, le premier siège, situé face à un volant 113, étant destiné à accueillir un conducteur du véhicule automobile, le deuxième siège étant destiné à accueillir un passager. L'habitacle comprend en outre un pare-brise 114 permettant aux occupants du véhicule automobile d'avoir un aperçu de la scène de la route se déroulant à l'avant AV du véhicule. Le véhicule automobile comprend également un rétroviseur intérieur 116 situé à l'intérieur de l'habitacle et un rétroviseur extérieur 118 situé à l'extérieur de l'habitacle, le rétroviseur intérieur 116 et le rétroviseur extérieur 118 permettant au conducteur d'avoir un aperçu de la scène de la route se déroulant à l'arrière AR du véhicule automobile, l'avant AV et l'arrière AR étant définis par rapport au sens de déplacement principal du véhicule automobile 100.

L'habitacle comprend un premier système optique 1 et un deuxième système optique 2, situés respectivement au niveau d'un bandeau d'une porte 120 du véhicule automobile et d'une planche de bord 122, la planche de bord désignant la partie de l'habitacle située en avant du premier siège et du deuxième siège et s'étendant entre un côté droit et un côté gauche de l'habitacle. Par exemple, la planche de bord comprend un tableau de bord situé face au conducteur et comprenant une pluralité d'indicateurs, tels qu'un indicateur de vitesse ou de régime moteur, la planche de bord pouvant également comprendre une ou plusieurs buses de ventilation, face au conducteur et/ou au passager. Le premier système optique 1 et le deuxième système optique 2 appartiennent à un dispositif d'éclairage intérieur 115 du véhicule, le dispositif d'éclairage intérieur 115 pouvant également comprendre, par exemple, un éclairage au niveau d'un plafond de l'habitacle, ou encore un éclairage ou niveau d'un compartiment de rangement.

Chaque système optique 1, 2 comprend une pluralité de surfaces d'affichage, ou zones d'écrans, 124 distinctes, chaque zone d'écran étant associée à une source lumineuse du système optique 1, 2. Ainsi, chaque système optique forme un bandeau ayant une dimension principale dans un axe longitudinal du système optique et une dimension secondaire plus faible selon un axe perpendiculaire à l'axe longitudinal du système optique. Le système optique comprend un module de commande, non représenté sur les figures 1 et 2, configuré pour donner des instructions d'activation sélective des sources lumineuses du système optique, permettant ainsi de générer un signal lumineux dynamique et/ou multicolore au niveau du système optique 1, 2, le signal lumineux correspondant à l'ensemble des faisceaux lumineux générés par les sources lumineuses du système optique.

La figure 1 illustre un mode de fonctionnement en veille, dans laquelle aucune situation de conduite particulière n'est détectée. Dans une telle situation, le premier système optique 1 et le deuxième système optique 2 sont ici inactifs avec les sources lumineuses du premier système optique et du deuxième système optique qui sont éteintes et qui n'émettent donc pas de faisceau lumineux. De la sorte, le premier système optique 1 et le deuxième système optique 2 ne génèrent pas de signal lumineux. On comprend que de manière alternative, le premier système optique 1 et/ou le deuxième système optique 2 peuvent également être configurés de sorte à générer un signal lumineux de veille n'indiquant pas de situation de conduite particulière, le signal lumineux pouvant alors notamment être statique et/ou unicolore.

La figure 2 illustre un mode de fonctionnement actif, dans lequel une situation de conduite particulière est détectée. Plus particulièrement, dans l'exemple illustré, le premier système optique 1 est rendu actif et le deuxième système optique 2 est inactif ou en tout cas dans l'état qu'il avait dans le mode de fonctionnement en veille. En effet, une première portion 126 des sources lumineuses du premier système optique est allumée, chaque source lumineuse de la première portion émettant un faisceau lumineux passant à travers la surface d'affichage ou la zone d'écran correspondante. A contrario, une deuxième portion 128 des sources lumineuses du premier système optique 1 est éteinte, n'émettant pas de faisceau lumineux. Ainsi, dans ce mode de fonctionnement actif, on comprend que l'on pilote l'allumage d'une ou plusieurs sources lumineuses de l'un et/ou l'autre des systèmes optiques pour permettre l'affichage d'un signal lumineux au niveau d'une portion plus ou moins grande de chaque système optique. En jouant sur l'allumage puis l'extinction des sources lumineuses, qui tel que cela sera décrit plus en détails ci-après sont agencées en série longitudinale les unes après les autres, il est alors possible de créer un signal dynamique, c'est-à-dire un signal dont la configuration évolue dans le temps en fonction des surfaces d'affichage, ou zones d'écran, qui sont allumées ou éteintes.

Dans la situation de conduite illustrée à la figure 2, le signal lumineux affiché par le premier système optique 1 peut permettre, par exemple, de signaler la présence d'un élément, notamment un autre véhicule, situé sur un côté gauche du véhicule automobile 100 par rapport à son sens de déplacement vers l'avant AV. Ainsi, l'allumage séquentiel des différentes sources lumineuses du premier système optique permet de représenter schématiquement la position de l'élément par rapport au véhicule automobile 100 selon un axe s'étendant entre l'avant AV et l'arrière AR du véhicule automobile 100. Le premier système optique permet par exemple au conducteur du véhicule automobile 100 de savoir s'il peut effectuer une manoeuvre, notamment afin de changer de voie de circulation, de manière sûre et sans danger, en apportant au conducteur une information visuelle complémentaire à l'information visuelle fournie par le rétroviseur intérieur et le rétroviseur extérieur. En effet, cette configuration permet d'éviter au conducteur d'avoir à quitter du regard la scène de la route se situant à l'avant AV du véhicule afin notamment de regarder dans un angle mort situé à gauche du conducteur, l'angle mort correspondant à une zone du champ visuel du conducteur qui n'est pas couverte ni par son champ de vision direct, ni par celui fourni par le rétroviseur intérieur 116 ou le rétroviseur extérieur 118. Le deuxième système optique 2 est dans cet exemple inactif, notamment car aucun élément n'est détecté sur un côté droit du véhicule automobile 100.

Ainsi, le premier système optique 1 peut permettre d'indiquer au conducteur du véhicule automobile qu'il peut effectuer en sécurité une manoeuvre de changement de voie de circulation vers la gauche dans la situation de conduite illustrée à la figure 1 tandis qu'une telle manoeuvre représente un danger, notamment une collision, dans la situation de conduite illustrée à la figure 2.

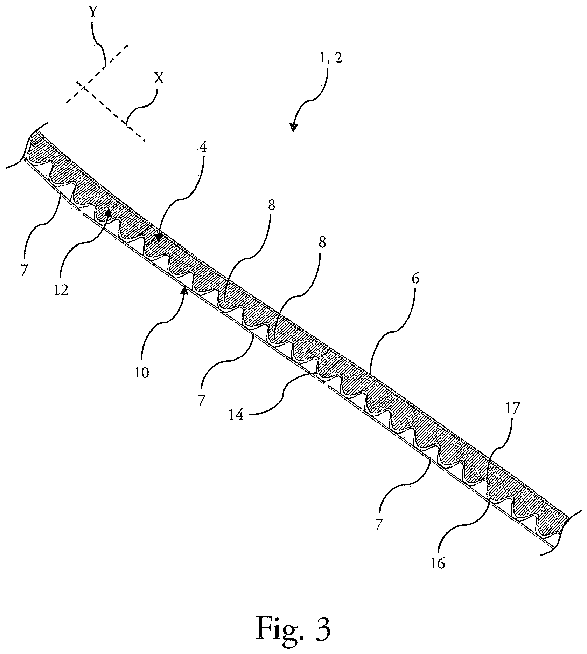

La figure 3 est une vue partielle en perspective d'un exemple de réalisation d'un système optique 1, 2 conforme au premier aspect de l'invention.

Le système optique 1, 2 s'étend selon un axe longitudinal X principal. Le système optique 1,2 comprend une boite à lumière 4, une pluralité de sources lumineuses et un écran 6 empilés selon un axe d'empilement Y perpendiculaire à l'axe longitudinal X. L'écran 6 est destiné à être orienté vers l'intérieur de l'habitacle du véhicule automobile, c'est-à-dire à être disposé entre l'habitacle et la boîte à lumière 4, afin de permettre la diffusion du signal lumineux à destination des occupants du véhicule automobile. Le système optique s'étend dans l'axe longitudinal X de préférence sur au moins 20 centimètres tandis qu'il s'étend dans un axe vertical perpendiculaire à un plan formé par l'axe longitudinal X et l'axe d'empilement Y de préférence sur une distance comprise entre 6 et 25 millimètres, le système optique 1, 2 formant ainsi un bandeau lumineux.

La boite à lumière définit un volume interne 12 rempli d'air et délimité par une paroi 14. La boite à lumière 4 comprend une pluralité de cavités 8 agencées en série selon l'axe longitudinal et délimitées entre elles par la paroi 14. Plus particulièrement, la paroi comprend une pluralité d'ondulations définissant une extrémité proximale 16 et une extrémité distale 17 des cavités dans l'axe d'empilement Y, l'extrémité proximale formant un fond de la cavité, l'extrémité distale formant la fin de la démarcation entre deux cavités adjacentes. Le système optique 1 comprend une pluralité de sources lumineuses, non visibles sur la figure 3, chaque source lumineuse permettant l'émission d'un faisceau lumineux à l'intérieur d'une cavité 8. Le volume interne 12 étant rempli d'air, le faisceau lumineux émis par la source lumineuse n'est pas réfracté dans la boite à lumière 4 sur son trajet depuis la source lumineuse jusqu'à l'écran.

Le système optique 1, 2 comprend, dans l'exemple de réalisation illustré, un circuit imprimé 10 situé à l'opposé du système optique par rapport à l'écran 6 dans l'axe d'empilement Y. Ainsi, l'extrémité proximale 16 est située à proximité du circuit imprimé 10. Le circuit imprimé 10 permet de relier électriquement chaque source lumineuse du système optique à un module de commande ici non représenté et pilotant l'alimentation électrique de chacune des sources lumineuses, permettant ainsi l'allumage et l'extinction de chaque source lumineuse du système optique de manière indépendante. Le circuit imprimé 10 est composé de plusieurs segments 7, trois segments 7 étant visibles sur la figure 3. L'utilisation d'un circuit imprimé 10 formé ainsi de plusieurs segments 7 permet d'apporter une certaine flexibilité au circuit imprimé 10 et de permettre l'implantation du circuit imprimé dans une zone galbée du véhicule.

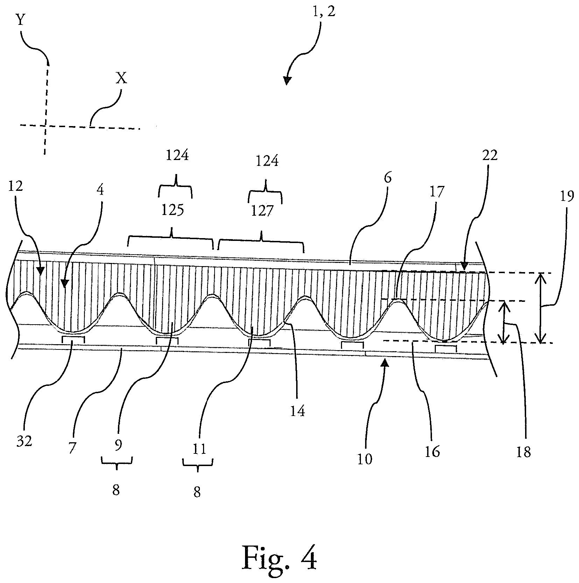

La figure 4 est une vue partielle en perspective en détail du système optique illustré à la figure 3.

Chaque source lumineuse 32 du système optique 1, 2 est associée à une cavité 8 de la boite à lumière 4. Plus particulièrement, chaque source lumineuse s'étend en saillie du circuit imprimé 10 et la paroi 14 est configurée avec un orifice au niveau de l'extrémité proximale 16 de chaque cavité pour venir entourer la source lumineuse correspondante, l'extrémité proximale 16 de la cavité étant la partie de la cavité la plus éloignée de l'écran 6 selon l'axe d'empilement Y. La source lumineuse peut être située à l'intérieur ou encore en bordure de la cavité 8 tant qu'elle permet l'émission d'un faisceau lumineux à l'intérieur de ladite cavité. Chaque source lumineuse 32 est par exemple une source lumineuse RGB, permettant ainsi l'émission d'un faisceau lumineux rouge, vert, bleu ou une combinaison de faisceaux lumineux rouge, vert et bleu à l'intérieur de la cavité, permettant ainsi la formation d'un faisceau lumineux multicolore.

Dans l'exemple de réalisation illustré aux figures 3 et 4, le fond d'une cavité 8 est situé à proximité du circuit imprimé 10. Ainsi, l'extrémité proximale 16 de la cavité forme une première terminaison de la boite à lumière 4, une deuxième terminaison 22 de la boite à lumière 4 étant située à l'opposé de la boite à lumière par rapport à la première terminaison selon l'axe d'empilement Y, la deuxième terminaison 22 recevant ainsi l'écran 6.

La paroi 14 de la boite à lumière permet de réfléchir le faisceau lumineux émis par chaque source lumineuse. Plus particulièrement, la paroi délimitant chaque cavité 8 permet de réfléchir le faisceau lumineux émis par la source lumineuse associée à ladite cavité de sorte que le faisceau lumineux soit projeté au niveau d'une surface d'affichage ou zone d'écran située en regard de ladite cavité selon l'axe longitudinal X. Ainsi, la paroi d'une première cavité 9 permet au faisceau lumineux émis par la source lumineuse située au niveau de ladite première cavité 9 d'être projeté au niveau d'une première zone d'écran 125 située en regard de ladite première cavité 9 selon l'axe longitudinal X. De manière analogue, la paroi d'une deuxième cavité 11 adjacente à la première cavité 9 permet au faisceau lumineux émis par la source lumineuse située au niveau de ladite deuxième cavité 11 d'être projeté au niveau d'une deuxième zone d'écran 127 située en regard de la deuxième cavité 11 selon l'axe longitudinal X. On comprend que de la sorte, la partie de la paroi 14 permettant de délimiter chaque cavité 8 permet d'éviter au faisceau lumineux émis par la source lumineuse associée à ladite cavité 8 d'être projeté au niveau d'une zone d'écran qui est décalée selon l'axe longitudinal par rapport à ladite cavité.

Afin de favoriser cette caractéristique, et s'assurer que la partie de la paroi disposée entre deux cavités bloque suffisamment les rayons susceptibles de passer d'une cavité à l'autre, le système optique est configuré de sorte qu'un rapport entre une première dimension 18 propre à la paroi d'une cavité et une deuxième dimension 19 propre à la boite à lumière, la première dimension 18 et la deuxième dimension 19 étant toutes deux mesurées selon l'axe d'empilement, soit compris entre 40% et 85%. En d'autres termes, la première dimension 18 est mesurée entre l'extrémité proximale 16 de la cavité, formant le fond de la cavité, à proximité de la source lumineuse associée à ladite cavité, et l'extrémité distale 17 de la cavité située à l'opposé de la cavité par rapport à l'extrémité proximale 16 selon l'axe d'empilement Y. La deuxième dimension 19 correspond à la dimension transversale globale de la boite à lumière 4, mesurée entre l'extrémité proximale 16 d'une cavité et la deuxième terminaison 22 portant l'écran. Cette configuration permet ainsi de maximiser la projection du faisceau lumineux émis par la source lumineuse associée à une cavité sur une zone d'écran en regard de ladite cavité, permettant ainsi d'éviter la projection du faisceau lumineux émis par la source lumineuse associée à la première cavité 9 au niveau de la deuxième zone d'écran 127. Cette configuration permet donc une segmentation nette du signal lumineux généré par le système optique 1, 2, cette configuration étant particulièrement intéressante, notamment dans le cas où le signal lumineux est dynamique et/ou multicolore, chaque source lumineuse du système optique 1, 2 étant activable de manière indépendante. De manière avantageuse, le rapport entre la première dimension 18 et la deuxième dimension 19 est ajusté afin de permettre un léger recouvrement de la deuxième zone d'écran 127 par le faisceau lumineux émis par la source lumineuse associée à la première cavité 9, permettant d'améliorer l'homogénéité du signal lumineux généré par le système optique 1, 2. Ainsi, une fraction des rayons lumineux émis par la source lumineuse associée à la première cavité est projetée sur la deuxième zone d'écran. Autrement dit, la partie de la paroi disposée entre deux cavités bloque suffisamment, mais pas totalement, les rayons lumineux susceptibles de passer d'une cavité à l'autre.

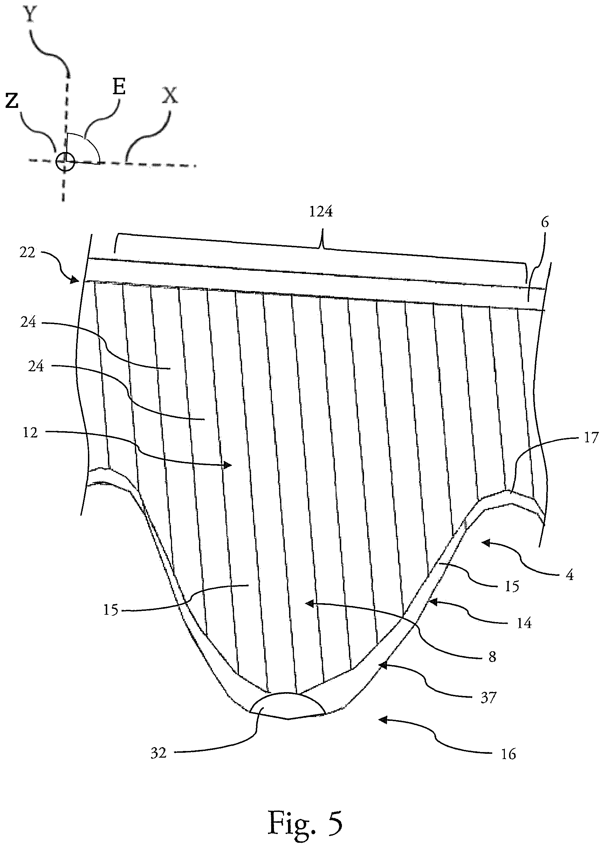

La figure 5 est une vue en coupe d'un exemple de réalisation d'un système optique 1, 2 conforme au premier aspect de l'invention, la coupe étant réalisée dans un plan E comprenant l'axe longitudinal X et l'axe d'empilement Y, ledit plan E, dit deuxième plan E est perpendiculaire à un premier plan D comprenant l'axe vertical Z et l'axe d'empilement Y.

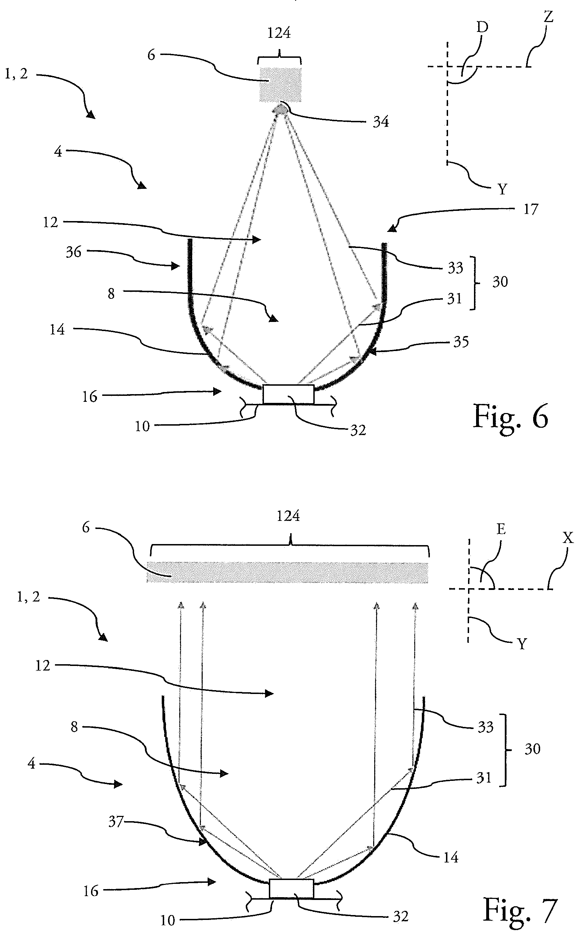

La cavité 8 présente un profil parabolique 37 dans le deuxième plan E. En effet, la portion de la paroi 14 délimitant la cavité décrit une parabole dans le deuxième plan E. Plus particulièrement, la portion de la paroi délimitant la cavité décrit une parabole qui s'étend d'une extrémité distale 17 à l'autre en passant par l'extrémité proximale 16. D'autre part, la cavité 8 présente un profil elliptique dans le premier plan D, la portion de la paroi délimitant la cavité décrivant une ellipse dans le premier plan D. Le profil elliptique sera mieux visible à la figure 6.

Une source lumineuse 32 est associée à ladite cavité, la source lumineuse 32 étant située à proximité de l'extrémité proximale 16 de la cavité. Dans l'exemple illustré à la figure 6, la source lumineuse est située à l'intérieur de la cavité 8, c'est-à-dire à l'intérieur du volume interne 12 de la boite à lumière 4. L'activation de la source lumineuse 32 permet l'émission d'un faisceau lumineux projeté sur l'écran 6 après réflexion le cas échéant sur la paroi 14 délimitant la cavité.

Une face interne 15 de la paroi 14 est recouverte d'un matériau réfléchissant permettant de réfléchir le faisceau lumineux émis par la source lumineuse 32, la face interne 15 de la paroi étant orientée vers l'intérieur de la cavité 8. Autrement dit, la face interne 15 est exposée au faisceau lumineux émis par la source lumineuse. Le matériau réfléchissant recouvrant la face interne 15 de la paroi 14 est de préférence de couleur blanche, favorisant ainsi la réflexion de l'ensemble des longueurs d'ondes du faisceau lumineux émis par la source lumineuse 32.

La face interne 15 de la paroi 14 comprend une pluralité de microstructures diffusantes 24 situées sur le profil elliptique de la cavité 8. Les microstructures diffusantes 24 permettent de favoriser la réflexion diffuse des rayons lumineux du faisceau lumineux au niveau de la cavité, favorisant ainsi l'homogénéisation du faisceau lumineux au sein de la boite à lumière 4. Ainsi, lorsqu'un rayon lumineux incident du faisceau lumineux rencontre la paroi au niveau d'une microstructure diffusante, il est réfléchi en une multitude de rayons lumineux réfléchis diffus, homogénéisant ainsi le faisceau lumineux au niveau de la cavité. Dans l'exemple illustré, les microstructures diffusantes s'étendent entre l'extrémité proximale 16 de la cavité et la deuxième terminaison 22 de la boite à lumière 4 en formant des bourrelets, s'étendant depuis la face interne 15 vers l'intérieur de la cavité.

La figure 6 est une représentation schématique d'un exemple de réalisation d'un système optique 1, 2 conforme au premier aspect de l'invention dans le premier plan D précédemment évoqué.

Ainsi, la figure 6 permet de visualiser la réflexion des rayons lumineux 30 formant le faisceau lumineux émis par la source lumineuse 32 associée à la cavité 8 sur le profil elliptique 35 de la paroi 14, les rayons lumineux pouvant être réfléchis sur la face interne de la paroi 14 avant d'être projetés sur l'écran 6.

Plus particulièrement, le profil elliptique 35 de la portion de paroi délimitant la cavité dans le premier plan D permet de concentrer les rayons lumineux 30 au niveau de l'écran 6, le profil elliptique 35 n'étant que partiel sur la portion de paroi délimitant la cavité, et plus particulièrement au voisinage de l'extrémité proximale 16, la portion de paroi délimitant la cavité comprenant un profil droit 36 sensiblement parallèle à l'axe d'empilement Y à proximité de l'extrémité distale 17. En effet, la source lumineuse 32 est positionnée à proximité d'un premier foyer de l'ellipse décrite par la paroi 14 dans le premier plan D, l'écran 6 étant quant à lui positionné à proximité d'un deuxième foyer de l'ellipse. Ainsi, lorsqu'un rayon lumineux incident 31 rencontre la face interne de la paroi 14 formant le profil elliptique, ledit rayon lumineux incident 31 est alors réfléchi en direction de l'écran 6, formant ainsi un rayon lumineux réfléchi 33. Le profil elliptique 35 de la paroi 14 permet la réflexion des rayons lumineux incident 31 de sorte que l'ensemble des rayons lumineux réfléchis 33 convergent au niveau d'un point formant le deuxième foyer de l'ellipse, l'écran 6 étant positionné à proximité de ce point. Ainsi, le profil elliptique de la paroi 14 de la cavité 8 dans le premier plan D permet de concentrer les rayons lumineux 30 au niveau d'une zone centrale 34 de l'écran 6, la zone centrale 34 étant située au centre de l'écran selon l'axe vertical Z, c'est-à-dire selon un petit côté de la zone d'écran 124 associée à ladite cavité 8. Cette caractéristique permet d'harmoniser le signal lumineux, c'est-à-dire s'assurer que d'une zone d'écran à l'autre, les occupants du véhicule ne constatent pas un décalage vertical du signal lumineux. En centrant les rayons sortant de chaque zone d'écran, on vise à proposer une continuité verticale du signal et donc l'obtention d'un signal harmonieux, que l'on soit dans le cas d'un signal lumineux statique ou bien dans le cas d'un signal lumineux dynamique dans lequel le signal lumineux est transmis par allumage et extinction successifs de surfaces d'écran voisines.

La figure 7 est une représentation schématique d'une cavité 8 d'un exemple de réalisation d'un système optique 1, 2 conforme au premier aspect de l'invention dans le deuxième plan E.

Ainsi, la figure 7 permet de visualiser la réflexion des rayons lumineux 30 formant le faisceau lumineux émis par la source lumineuse 32 associée à la cavité 8 sur le profil parabolique 37 de la paroi 14, les rayons lumineux pouvant être réfléchis sur la face interne de la paroi 14 avant d'être projetés sur l'écran 6.

Plus particulièrement, le profil parabolique 37 de la portion de la paroi délimitant la cavité dans le deuxième plan E permet de collimater le faisceau lumineux formé par l'ensemble des rayons lumineux 30 émis par la source lumineuse 32. En effet, la source lumineuse est positionnée à proximité du foyer de la parabole décrite par le profil parabolique 37 de la paroi 14 dans le deuxième plan E. Ainsi, lorsqu'un rayon lumineux incident 31 rencontre la face interne de la paroi 14 formant le profil parabolique, ledit rayon lumineux incident 31 est alors réfléchi en direction de l'écran, formant un rayon lumineux réfléchi 33. Le profil parabolique 37 de la paroi 14 dans le deuxième plan E permet la réflexion des rayons lumineux incident 31 de sorte que l'ensemble des rayons lumineux réfléchis 33 soient parallèles entre eux ainsi qu'à l'axe d'empilement Y. Ainsi, le profil parabolique 37 de la paroi dans le deuxième plan E permet de répartir de manière homogène le faisceau lumineux, notamment la colorimétrie et la luminance dudit faisceau lumineux, sur la totalité de la zone d'écran 124 selon l'axe longitudinal X, c'est-à-dire selon un grand côté de la zone d'écran 124. La source lumineuse pouvant être tel que précédemment décrit une source lumineuse RGB ou RGBW, l'homogénéisation de la colorimétrie du faisceau lumineux émis par ladite source lumineuse permet l'obtention d'un faisceau lumineux multicolore homogène, c'est-à-dire dont la teinte est homogène sur la totalité de la zone d'écran 124 selon l'axe longitudinal X.

On peut remarquer, notamment en se référant à la représentation schématique des figures 6 et 7, que l'étendue de la portion de la paroi comprenant un profil elliptique est inférieure à l'étendue de la portion de la paroi comprenant un profil parabolique.

D'une part, le profil elliptique se trouve dans le premier plan D comprenant l'axe vertical Z. Or, l'encombrement est contraint dans cette section et ceci impose une faible dimension de la zone d'écran sur laquelle projeter le signal lumineux.

D'autre part, l'utilisation d'un profil parabolique dans le deuxième plan E, comprenant l'axe longitudinal X, permet d'augmenter la dimension longitudinale de la zone d'écran éclairée par une même source lumineuse, ce qui permet pour une longueur donnée du système optique de réduire le nombre de sources lumineuses de ce système optique, et ainsi de diminuer les coûts de fabrication d'un tel système optique.

On comprend des figures 6 et 7 que le système optique 1, 2 selon l'invention permet de s'affranchir de l'utilisation d'une pièce optique supplémentaire, telle qu'une lentille optique, intercalée entre la source lumineuse 32 et l'écran 6 afin d'assurer l'homogénéisation et la collimation du faisceau lumineux à l'intérieur de la cavité 8.

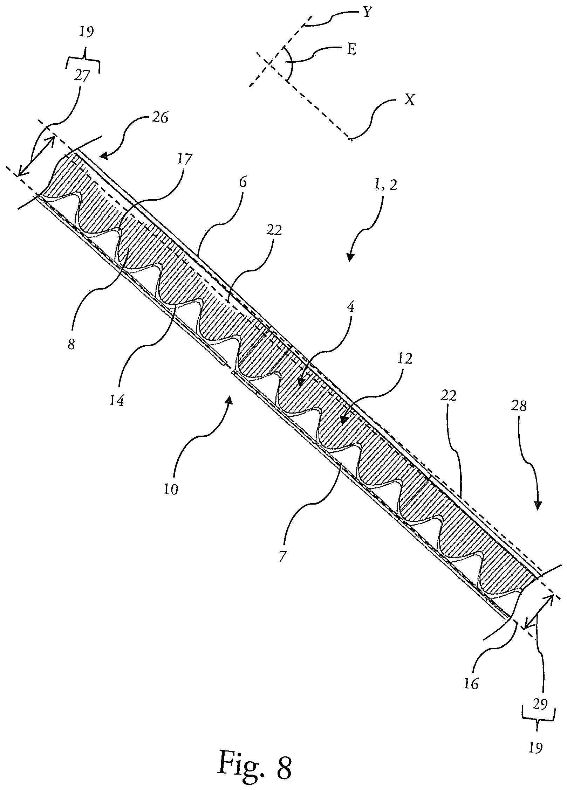

La figure 8 est une vue en perspective d'un autre exemple de réalisation d'un système optique 1, 2 conforme au premier aspect de l'invention. La boite à lumière 4 de l'exemple de réalisation illustré comprend une dimension selon l'axe d'empilement Y qui est variable entre une première extrémité longitudinale 26 et une deuxième extrémité longitudinale 28. Autrement dit, la deuxième dimension 19, mesurée entre l'extrémité proximale16 et la deuxième terminaison 22 de la boite à lumière 4, est variable au fur et à mesure que l'on se déplace selon l'axe longitudinal X. Tel qu'illustré, la deuxième dimension mesurée au niveau de la première extrémité longitudinale 26 forme une première profondeur 27 et la deuxième dimension mesurée au niveau de la deuxième extrémité longitudinale 28 forme une deuxième profondeur 29 et l'on peut voir sur cette figure 8 que la première profondeur 27 est plus grande que la deuxième profondeur 29. Cette configuration est permise d'une part par l'utilisation d'un circuit imprimé flexible et/ou segmenté pour adapter au mieux la position de chaque source lumineuse au plus près du foyer de l'ellipse et/ou du foyer parabolique de la cavité, et d'autre part par l'utilisation d'un matériau réfléchissant recouvrant la face interne de la paroi permettant une réflexion partiellement diffuse du faisceau lumineux, permettant ainsi une certaine souplesse quant au positionnement de la source lumineuse 32 et/ou de l'écran 6 par rapport aux foyers de l'ellipse du profil elliptique 35 et/ou de la parabole du profil parabolique 37 de la paroi 14 de la cavité 8, permettant ainsi au système optique de présenter une courbure afin de satisfaire à des contraintes, notamment d'encombrement, au sein de l'habitacle du véhicule automobile, le système optique présentant une forme de bandeau, s'étendant sur une longueur importante dans l'axe longitudinal X, le système optique étant ainsi soumis aux galbes d'éléments structurels sur lequel le système optique est disposé.

L'invention, telle qu'elle vient d'être décrite, atteint bien les buts qu'elle s'était fixés et permet de proposer un système optique de conception simple et de faible encombrement permettant d'assurer l'homogénéisation du faisceau lumineux qu'il génère. Des variantes non décrites ici pourraient être mises en oeuvre sans sortir du cadre de l'invention tel que défini par les revendications.

## Revendications

1. Système optique (1, 2) pour éclairage intérieur d'un véhicule automobile (100), le système optique (1, 2) comprenant un écran (6) et une pluralité de sources lumineuses (32) disposées en série, les unes à la suite des autres en formant une courbe ou une ligne, cet agencement en série formant un axe longitudinal (X) du système optique, la pluralité de sources lumineuses étant configurée pour projeter un faisceau lumineux sur l'écran (6), le système optique comprenant une boite à lumière (4) intercalée entre la pluralité de sources lumineuses et l'écran selon un axe d'empilement (Y) perpendiculaire à l'axe longitudinal (X), la boite à lumière (4) recevant l'écran et comprenant une pluralité de cavités (8), chaque source lumineuse (32) étant associée à une cavité (8) de la boite à lumière, chaque source lumineuse (32) pouvant être activée de manière indépendante, un rapport entre une première dimension (18), propre à une paroi (14) d'une cavité (8), et mesurée entre l'extrémité proximale (16) de la cavité (8), formant le fond de la cavité (8), à proximité de la source lumineuse (32) associée à ladite cavité (8), et l'extrémité distale (17) de la cavité (8) située à l'opposé de la cavité (8) par rapport à l'extrémité proximale (16) selon l'axe d'empilement (Y), et une deuxième dimension (19), propre à la boite à lumière, et mesurée entre le fond de la cavité (8) et la partie de la boite à lumière (4) qui reçoit l'écran (6), la première dimension (18) et la deuxième dimension (19) étant mesurées parallèlement à l'axe d'empilement (Y), perpendiculaire à l'axe longitudinal (X), étant compris entre 40% et 85%, **caractérisé en ce que** :
- la cavité(8) comprend un profil elliptique dans un premier plan (D) perpendiculaire à l'écran (6) et passant par la source lumineuse associée à la dite cavité (8) ;
- la cavité (8) comprend un profil parabolique dans un deuxième plan (E) perpendiculaire à l'écran (6) et passant par la source lumineuse associée à la dite cavité (8),
- le premier plan (D) et le deuxième plan (E) sont perpendiculaires entre eux,
- le deuxième plan (E) s'étend selon l'axe d'empilement (Y) et l'axe longitudinal (X).

2. Système optique (1, 2) selon l'une quelconque des revendications précédentes, dans lequel la source lumineuse est une source lumineuse RGB et/ou une source lumineuse RGBW.

3. Système optique (1, 2) selon l'une quelconque des revendications précédentes, dans lequel la boite à lumière (4) comprend une dimension selon un axe d'empilement (Y) qui est variable entre une première extrémité longitudinale (26) et une deuxième extrémité longitudinale (28).

4. Système optique (1, 2) selon l'une quelconque des revendications précédentes, dans lequel une face interne (15) de la paroi (14) est recouverte d'un matériau permettant simultanément une réflexion spéculaire et une réflexion diffuse du faisceau lumineux.

5. Système optique (1, 2) selon la revendication précédente, dans lequel la face interne (15) de la paroi (14) comprend une pluralité de microstructures diffusantes (24).

6. Système optique (1, 2) selon l'une quelconque des revendications précédentes, dans lequel l'écran (6) est un écran diffusant.

7. Système optique (1, 2) selon l'une quelconque des revendications précédentes, dans lequel le système optique (1, 2) comporte un module de commande configuré pour donner des instructions sélectives d'activation des sources lumineuses pour permettre l'affichage d'un signal lumineux dynamique et/ou multicolore.

8. Véhicule automobile (100) comprenant un dispositif d'éclairage intérieur (115), le dispositif d'éclairage intérieur comprenant un système optique (1, 2) selon l'une quelconque des revendications précédentes.

9. Véhicule automobile (100) selon la revendication précédente, dans lequel le système optique (1, 2) est situé au niveau d'un bandeau d'une porte (120) et/ou d'une planche de bord (122) du véhicule automobile (100).

## Patentansprüche

1. Optisches System (1, 2) zur Innenraumbeleuchtung eines Kraftfahrzeugs (100), wobei das optische System (1, 2) einen Schirm (6) und eine Vielzahl von Lichtquellen (32), die aufeinanderfolgend in Reihe angeordnet sind und dabei eine Kurve oder eine Linie bilden, beinhaltet, wobei diese Reihenanordnung eine Längsachse (X) des optischen Systems bildet, wobei die Vielzahl von Lichtquellen dazu konfiguriert ist, einen Lichtstrahl auf den Schirm (6) zu projizieren, wobei das optische System einen Lichtkasten (4) beinhaltet, der gemäß einer Stapelachse (Y), die zu der Längsachse (X) senkrecht ist, zwischen der Vielzahl von Lichtquellen und dem Schirm eingefügt ist, wobei der Lichtkasten (4) den Schirm aufnimmt und eine Vielzahl von Hohlräumen (8) beinhaltet, wobei jede Lichtquelle (32) mit einem Hohlraum (8) des Lichtkastens assoziiert ist, wobei jede Lichtquelle (32) unabhängig aktiviert werden kann, wobei ein Verhältnis zwischen einem ersten Maß (18), das zu einer Wand (14) eines Hohlraums (8) gehört und gemessen wird zwischen dem proximalen Ende (16) des Hohlraums (8), das den Boden des Hohlraums (8) bildet, in der Nähe der Lichtquelle (32), die mit dem Hohlraum (8) assoziiert ist, und dem distalen Ende (17) des Hohlraums (8), das sich gemäß der Stapelachse (Y) mit Bezug auf das proximale Ende (16) auf der gegenüberliegenden Seite des Hohlraums (8) befindet, und einem zweiten Maß (19),
das zu dem Lichtkasten gehört und gemessen wird zwischen dem Boden des Hohlraums (8) und dem Teil des Lichtkastens (4), der den Schirm (6) aufnimmt, wobei das erste Maß (18) und das zweite Maß (19) parallel zu der Stapelachse (Y), die zu der Längsachse (X) senkrecht ist, gemessen werden, zwischen 40 % und 85 % beträgt, **dadurch gekennzeichnet, dass**:
- der Hohlraum (8) ein elliptisches Profil in einer ersten Ebene (D) beinhaltet, die senkrecht zu dem Schirm (6) ist und durch die Lichtquelle, die mit dem Hohlraum (8) assoziiert ist, verläuft;
- der Hohlraum (8) ein parabolisches Profil in einer zweiten Ebene (E) beinhaltet, die senkrecht zu dem Schirm (6) ist und durch die Lichtquelle, die mit dem Hohlraum (8) assoziiert ist, verläuft,
- die erste Ebene (D) und die zweite Ebene (E) zueinander senkrecht sind,
- sich die zweite Ebene (E) gemäß der Stapelachse (Y) und der Längsachse (X) erstreckt.

2. Optisches System (1, 2) nach einem beliebigen der vorhergehenden Ansprüche, wobei die Lichtquelle eine RGB-Lichtquelle und/oder eine RGBW-Lichtquelle ist.

3. Optisches System (1, 2) nach einem beliebigen der vorhergehenden Ansprüche, wobei der Lichtkasten (4) ein Maß gemäß einer Stapelachse (Y) beinhaltet, das zwischen einem ersten Längsende (26) und einem zweiten Längsende (28) variabel ist.

4. Optisches System (1, 2) nach einem beliebigen der vorhergehenden Ansprüche, wobei eine Innenfläche (15) der Wand (14) mit einem Material beschichtet ist, das gleichzeitig eine spiegelnde und eine diffuse Reflexion des Lichtstrahls gestattet.

5. Optisches System (1, 2) nach dem vorhergehenden Anspruch, wobei die Innenfläche (15) der Wand (14) eine Vielzahl von streuenden Mikrostrukturen (24) beinhaltet.

6. Optisches System (1, 2) nach einem beliebigen der vorhergehenden Ansprüche, wobei der Schirm (6) ein streuender Schirm ist.

7. Optisches System (1, 2) nach einem beliebigen der vorhergehenden Ansprüche, wobei das optische System (1, 2) ein Steuermodul umfasst, das dazu konfiguriert ist, selektive Aktivierungsanweisungen für die Lichtquellen auszugeben, um die Anzeige eines dynamischen und/oder mehrfarbigen Lichtsignals zu gestatten.

8. Kraftfahrzeug (100), das eine Vorrichtung zur Innenraumbeleuchtung (115) beinhaltet, wobei die Vorrichtung zur Innenraumbeleuchtung ein optisches System (1, 2) nach einem beliebigen der vorhergehenden Ansprüche beinhaltet.

9. Kraftfahrzeug (100) nach dem vorhergehenden Anspruch, wobei das optische System (1, 2) im Bereich einer Verkleidung einer Tür (120) und/oder eines Armaturenbretts (122) des Kraftfahrzeugs (100) eingerichtet ist.

## Claims

1. Optical system (1, 2) for interior lighting of a motor vehicle (100), the optical system (1, 2) comprising a screen (6) and a plurality of light sources (32) disposed in series, one after the other, forming a curve or a line, this serial arrangement forming a longitudinal axis (X) of the optical system, the plurality of light sources being configured to project a light beam onto the screen (6), the optical system comprising a light box (4) between the plurality of light sources and the screen along the stacking axis (Y) perpendicular to the longitunal axis (X), the light box (4) receiving the screen and comprising a plurality of cavities (8), each light source (32) being associated with a cavity (8) of the light box, each light source (32) being activatable independently a ratio between a first dimension (18) specific to a wall (14) of a cavity (8) and measured between the proximal end (16) of the cavity (8), forming the bottom of the cavity (8), close to the light source (32) associated with said cavity (8), and the distal end (17) of the cavity (8) located opposite the cavity (8) with respect to the proximal end (16) along the stacking axis (Y), and a second dimension (19) specific to the light box, and measured between the bottom of the cavity (8) and the part of the light box (4) which receives the screen (6), the first dimension (18) and the second dimension (19) being measured parallel to the stacking axis (Y) perpendicular to the longitunal (X), being between 40% and 85%, **Characterized in that**:
- the cavity (8) has an elliptical profile in a first plane (D) perpendicular to the screen (6) and passing through the light source associated with said cavity (8);
- the cavity (8) has a parabolic profile in a second plane (E) perpendicular to the screen (6) and passing through the light source associated with said cavity (8);
- the first plane (D) and the second plane (E) are perpendicular to each other;
- the second plane (E) extends along the stacking axis (Y) and the longitunal axis (X).

2. Optical system (1, 2) according to any one of the preceding claims, in which the light source is an RGB light source and/or an RGBW light source.

3. Optical system (1, 2) according to any one of the preceding claims, in which the light box (4) comprises a dimension along a stacking axis (Y) that is variable between a first longitudinal end (26) and a second longitudinal end (28).

4. Optical system (1, 2) according to any one of the preceding claims, in which an internal face (15) of the wall (14) is covered with a material simultaneously enabling specular reflection and diffuse reflection of the light beam.

5. Optical system (1, 2) according to the preceding claim, in which the internal face (15) of the wall (14) comprises a plurality of diffusing microstructures (24).

6. Optical system (1, 2) according to any one of the preceding claims, in which the screen (6) is a diffusing screen.

7. Optical system (1, 2) according to any one of the preceding claims, in which the optical system (1, 2) includes a control module configured to give instructions for selective activation of the light sources to enable the display of a dynamic and/or multicolour light signal.

8. Motor vehicle (100) comprising an interior lighting device (115), the interior lighting device comprising an optical system (1, 2) according to any one of the preceding claims.

9. Motor vehicle (100) according to the preceding claim, in which the optical system (1, 2) is situated at the level of a strip on a door (120) and/or of a dashboard (122) of the motor vehicle (100).
